# EUROPÄISCHE PATENTANMELDUNG

(11) **EP 4 560 297 A1**
(43) Veröffentlichungstag der Anmeldung: **28.05.2025**
(21) Anmeldenummer: 24212059.0
(22) Anmeldetag: 11.11.2024
(51) Int. Cl.: G01N 21/90

(54) **VERFAHREN UND VORRICHTUNG ZUR INSPEKTION VON AN BEHÄLTNISSEN ANGEBRACHTEN BEHÄLTNISVERSCHLÜSSEN**

(30) Priorität: 24.11.2023 DE 102023132891
(71) Anmelder: Krones AG, 93073 Neutraubling (DE)
(72) Erfinder: Bock, Thomas, 93073 Neutraubling (DE)
(74) Vertreter: Bittner, Bernhard

(57) **Zusammenfassung**

Verfahren zum Behandeln von mit Behältnisverschlüssen (20) versehenen Behältnissen (10), wobei befüllte Behältnisse (10) transportiert werden und eine Verschließvorrichtung (4) diese Behältnisse (10) jeweils mit Behältnisverschlüssen (20) versieht, wobei es sich bei diesen Behältnisverschlüssen (20) um Kronkorken oder um Schraubverschlüsse handelt und wobei die Verschließvorrichtung (4) wenigstens zwei Verschließeinheiten (42, 44) aufweist, welche jeweils die Behältnisverschlüsse (20) an den Behältnissen (10) anbringen und wobei eine in einer Transportrichtung nach der Verschließvorrichtung angeordnete Inspektionseinrichtung (6) die mit den Verschlüssen (10) versehenen Behältnisse inspiziert, dadurch gekennzeichnet, dass die Inspektionseinrichtung (6) wenigstens zwei Bildaufnahmeeinrichtungen (62, 64) aufweist, welche jeweils von jedem Behältnis wenigstes ein ortsaufgelöstes Bild aufnehmen und eine Auswerteeinrichtung (8) die aufgenommenen Bilder auswertet und aus den Bildern wenigstens einen Messwert bestimmt, wobei dieser Messwert für die an den Behältnissen angeordneten Behältnisverschlüsse charakteristisch ist.

## Beschreibung

Die vorliegende Erfindung bezieht sich auf ein Verfahren und eine Vorrichtung zur Inspektion von Behältnisverschlüssen.

Aus dem Stand der Technik ist es seit langem bekannt, dass im Rahmen der Herstellung von Getränkebehältnissen auch eine Kontrolle deren Verschlüsse vorgenommen wird. Zum Teil werden dabei einzelne verschlossene Behältnisse aus dem Behältnisstrom genommen und die Behältnisverschlüsse werden kontrolliert. Auch ist es bekannt, die Verschließereinstellungen zu überprüfen. So ist es bekannt, dass vor der Produktion eine Verschließerrunde verschlossener Flaschen ausgeleitet wird und manuell mit einer Lehre beispielsweise der Durchmesser der aufgebrachten Kronkorken vermessen wird.

Dies muss im Stand der Technik vor jeder Produktion von einem Mitarbeiter durchgeführt werden. Diese Art der Messung erfolgt üblicherweise offline. Es wird damit nicht die komplette Produktion überwacht und ein auftretender Verschließerfehler wird nicht erkannt, da die Verschlusskontrollen meist nicht so genau arbeiten. Zudem arbeiten die im Stand der Technik bekannten Verschlusskontrollen derzeit über ein Mustervergleichsverfahren und beurteilen damit beispielsweise nicht den gemessenen Durchmesser.

Aus der EP 3 605 010 A1 sind ein Verfahren und eine Vorrichtung zum Erfassen von Verschlüssen von Behältnissen bekannt. Dabei werden Verschlüsse untersucht, welche ein korkenartiges Element aufweisen, welches in eine Mündung des Behältnisses eingreift.

Die GB 2 135 447 A beschreibt ein Verfahren zum Untersuchen von Schraubenverschlüssen.

Aus der DE 10 2014 107 915 A1 ist eine Inspektionsvorrichtung für Behälterverschlüsse bekannt. Dabei ist eine optische Linse als rotationssymmetrische Linse ausgebildet und weist mindestens zwei Linsenbereiche auf, wovon ein Linsenbereich eine konvexe Oberfläche und mindestens ein weiterer Linsenbereich eine plansphärische Oberfläche aufweist.

Die WO 2019/003170 A1 beschreibt ein Verfahren und eine Vorrichtung zum Übergeben von Stückgütern auf eine Transportlinie.

Der vorliegenden Erfindung liegt die Aufgabe zugrunde, ein Verfahren und eine Vorrichtung zur Verfügung zu stellen, welche insbesondere auch eine Inline-Inspektion der Verschlüsse und insbesondere der Schraub- und/oder Kronkorkenverschlüsse ermöglichen.

Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Behandeln von mit Behältnisverschlüssen versehenen oder zu versehenden Behältnissen werden (mit einer fließfähigen Substanz, insbesondere einer Flüssigkeit und insbesondere mit einem Getränk) befüllte Behältnisse transportiert und eine Verschließvorrichtung versieht und insbesondere verschließt diese Behältnisse jeweils mit Behältnisverschlüssen, wobei es sich bei diesen Behältnisverschlüssen um Kronkorken oder um Schraubverschlüsse handelt wobei die Verschließvorrichtung wenigstens zwei Verschließeinheiten aufweist, welche jeweils die Behältnisverschlüsse an den Behältnissen anbringen und wobei eine in einer Transportrichtung nach der Verschlie-ßervorrichtung angeordnete Inspektionseinrichtung die mit den Verschlüssen versehenen Behältnisse inspiziert.

Erfindungsgemäß weist die Inspektionseinrichtung wenigstens zwei Bildaufnahmeeinrichtungen auf, welche jeweils wenigstens von einigen Behältnissen und bevorzugt von jedem Behältnis und/oder dem an dem Behältnis angeordneten Behältnisverschluss wenigstens ein ortsaufgelöstes Bild aufnehmen und es ist weiterhin eine Auswerteinrichtung vorgesehen, welche die aufgenommenen Bilder auswertet und aus den Bildern wenigstens einen Messwert bestimmt, wobei dieser Messwert für die an den Behältnissen angeordneten Behältnisverschlüsse charakteristisch ist.

Genauer gesagt wird wenigstens ein Messwert bestimmt, der für eine physikalische Eigenschaft der an den Behältnissen angeordneten Behältnisverschlüsse charakteristisch ist. Bevorzugt handelt es sich bei dieser Eigenschaft um eine geometrische Größe und insbesondere um einen Durchmesser der an den Behältnissen angeordneten Behältnisverschlüsse.

Es wird daher vorgeschlagen, dass eine Kontrolle der Behältnisverschlüsse inline und insbesondere während eines Produktionsbetriebs erfolgt. Besonders bevorzugt wird dabei jedes der verschlossenen Behältnisse inspiziert und oder geprüft. Es wäre jedoch auch möglich, dass lediglich jedes n-te Behältnis inspiziert wird oder auch zufällig ausgewählte Behältnissen bzw. deren Behältnisverschlüsse.

Grundsätzlich kann bei diesen Verschlüssen das Problem auftreten, dass diese, beispielsweise Kronkorken zu locker auf den Behältnissen sitzen. In diesem Fall kann es sein, dass beispielsweise Luft in die Behältnisse gelangt, was die Haltbarkeit des in den Behältnissen befindlichen Produkts beeinträchtigt.

Umgekehrt kann es jedoch auch sein, dass die Verschlüsse zu fest an den Behältnissen angeordnet sind und es dann beispielsweise beim Öffnen der Behältnisse zu einer Beschädigung einer Mündung, beispielsweise zu einem Glasbruch an der Behältnismündung kommt. Bei Schraubverschlüssen kann das Problem auftreten, dass diese zu fest auf die Mündung aufgeschraubt sind und von Hand nicht mehr gelöst werden können oder das Behältnis beim Aufschrauben beschädigt wird.

Bei einem bevorzugten Verfahren werden die Behältnisse entlang eines kreissegmentartigen Transportpfades transportiert, während sie mit den Behältnisverschlüssen verschlossen werden.

Bevorzugt weist die Verschließvorrichtung wenigstens 3 bevorzugt wenigstens 4 Verschließeinheiten auf. Dabei können diese Verschließeinheiten beispielsweise als Verschließköpfe ausgebildet sein, welche die Verschlüsse an den Behältnissen anbringen, beispielsweise sie auf die Behältnisse aufdrücken. Daneben können diese Verschließeinheiten auch als Verschließköpfe ausgebildet sein, welche die Behältnisverschlüsse auf die Behältnisse aufschrauben bzw. anbördeln.

Bevorzugt weist die Verschließvorrichtung höchstens 80, bevorzugt höchstens 60, bevorzugt höchstens 50 und bevorzugt höchstens 40 Verschließeinheiten auf.

Bevorzugt sind diese Verschließeinheiten dabei an einen drehbaren Träger angeordnet. Besonders bevorzugt sind an diesem drehbaren Träger auch Halteeinrichtungen zum Halten der einzelnen Behältnisse angeordnet. Bevorzugt ist jeder dieser Halteeinrichtung genau eine Verschließeinheit zugeordnet.

Bevorzugt weisen die jeweiligen Verschließeinheiten jeweils Antriebseinrichtungen auf, welche das Anbringen der Behältnisverschlüsse an den Behältnissen bewirken. Bei einer weiteren bevorzugten Ausführungsform sind die Verschließeinheiten unabhängig voneinander steuerbar. Dies bedeutet, dass bevorzugt die einzelnen Verschließeinheiten und insbesondere die von diesen Verschließeinheiten durchgeführten Bewegungen nicht miteinander gekoppelt sind.

Besonders bevorzugt werden die Behältnisse mit einer Transportgeschwindigkeit transportiert, die größer ist als 0,5 m/s bevorzugt größer als 1 m/s. Bei einen weiteren bevorzugten Verfahren werden die Behältnisse mit einer Geschwindigkeit transportiert, die kleiner ist als 5 m/s bevorzugt kleiner 4 m/s, bevorzugt kleiner als 3 m/s und bevorzugt kleiner 2,5 m/s.

Bevorzugt werden die zu verschließenden Behältnisse mit einer ersten Transporteinrichtung transportiert und die mit den Behältnisverschlüssen verschlossenen Behältnisse werden mit einer zweiten Transporteinrichtung transportiert. Bevorzugt handelt es sich bei dieser zweiten Transporteinrichtung um ein Transportband.

Bevorzugt werden die Behältnisse während ihrer Inspektion in einer geradlinigen Richtung transportiert. Besonders bevorzugt werden die Behältnisse während ihrer Inspektion von einem insbesondere einbahnigen Transportband transportiert.

Besonders bevorzugt werden die Behältnisse beabstandet zueinander transportiert. Bevorzugt werden die Behältnisse vereinzelt transportiert. Bevorzugt ist ein Abstand der von wenigstens einer Transporteinrichtung transportierten Behältnissen während deren Inspektion kleiner als der zweifache Durchmesser eines Behältnisses, bevorzugt kleiner als der 1,5-fache Durchmesser eines Behältnisses, bevorzugt kleiner als der 1,0-fache Durchmesser eines Behältnisses und besonders bevorzugt geringer als der 0,5-fache Durchmesser eines Behältnisses.

Bei weiteren bevorzugten Ausführungsformen handelt es sich bei der oder den Bildaufnahmeeinrichtung(en) um eine Kamera bzw. um Kameras. Besonders bevorzugt ist diese Bildaufnahmeeinrichtung oder sind diese Bildaufnahmeeinrichtungen derart ausgerichtet, dass sie die Behältnisse und/oder die Behältnisverschlüsse schräg oder senkrecht zu einer Längsrichtung der Behältnisse beobachten.

Besonders bevorzugt ist ein Aufnahmewinkel gegenüber einer bezüglich der Längsrichtung senkrecht stehenden Richtung und/oder bezüglich einer horizontalen Ebene geringer als 20°, bevorzugt geringer als 15° und besonders bevorzugt geringer als 10°. Dabei wäre es möglich, dass die Bildaufnahmeeinrichtungen die an den Behältnissen angeordneten Behältnisverschlüsse schräg von oben beobachten, es wäre jedoch auch möglich, dass die Bildaufnahmeeinrichtung(en) die an den Behältnissen angeordneten Behältnisverschlüsse schräg von unten beobachten. Auch wäre eine Beobachtung senkrecht zu der Längsrichtung der Behältnisse möglich.

Bevorzugt handelt es sich bei den Behältnissen um Kunststoffflaschen oder um Glasflaschen. Bei der in den Behältnissen befindlichen Flüssigkeit handelt es sich insbesondere um ein Getränk, beispielsweise Bier, Limonade, Säfte oder Wasser.

Bei einem weiteren bevorzugten Verfahren wird der Behältnisverschluss zur Ermittlung des besagten Messwerts vermessen. Besonders bevorzugt wird der Behältnisverschluss in einem dreidimensionalen Raum vermessen. Dieser dreidimensionale Raum kann beispielsweise basierend auf einer Positionserfassung des Behältnisses gebildet werden. Auf diese Weise kann der besagte Messwert bestimmt werden, bei dem es sich, wie oben erwähnt, insbesondere um einen Durchmesser oder einen Radius des Verschlusses handelt. Es wäre jedoch auch möglich, einen anderen Wert zu bestimmen, insbesondere einen Wert, der Rückschlüsse auf den Durchmesser erlaubt, wie etwa eine Krümmung eines Umfangsrandes des Behältnisverschlusses.

Besonders bevorzugt ordnet eine Zuordnungseinrichtung dem Messwert diejenige Verschließeinheit zu, welche das Behältnis mit dem inspizierten Behältnisverschluss verschlossen hat. Falls, wie oben erwähnt, eine Vielzahl von Verschließeinheiten vorgesehen ist, wird damit einem inspizierten Behältnis bevorzugt diejenige Verschließeinheit zugeordnet, die dieses Behältnis verschlossen hat.

Mit der hier beschriebenen zusätzlichen Organzuordnung zu den Verschließeinheiten ist auf diese Weise -insbesondere Inline- eine vollständige Überwachung der Verschließvorrichtung und/oder der Verschließorgane bzw. Verschließeinheiten und/oder der Produktion möglich.

Bei einem bevorzugten Verfahren wird eine Vielzahl der genannten Messwerte für eine Vielzahl von Behältnisverschlüssen erfasst und bevorzugt abgespeichert. Auf diese Weise ist es möglich, Trends zu erkennen, etwa eine Verschlechterung der Verschlussqualität. Diese Verschlechterung kann bevorzugt auch für einzelne Verschließeinheiten ermittelt werden.

So kann beispielsweise für die n-te Verschließeinheit festgestellt werden, dass sich die Verschlussqualität ändert.

Bevorzugt wird der besagte Messwert für einen vorgegebenen Bereich des Behältnisverschlusses ermittelt, etwa für dessen Umfangsrand, der die Mündung des Behältnisses umgibt.

Bei einem weiteren bevorzugten Verfahren werden wenigstens zwei, bevorzugt mindestens drei und besonders bevorzugt mindestens von den Bildaufnahmeeinrichtungen aufgenommene Bilder ausgewertet, um den Messwert zu bestimmen, wobei es sich bei dem Messwert insbesondere um einen Durchmesser handelt. Dabei werden bevorzugt diese Bilder unabhängig voneinander ausgewertet.

Bei einem weiteren bevorzugten Verfahren werden die wenigstens zwei und bevorzugt wenigstens drei von den Bildaufnahmeeinrichtungen aufgenommene Bilder zu einem Panoramabild und/oder einem Abwicklungsbild wenigstens eines Abschnitts des Behältnisverschlusses zusammengefügt. So kann beispielsweise eine 360° Abwicklung eines Umfangsrandes des an dem Behältnis angeordneten Behältnisverschlusses dargestellt werden.

Bei einem weiteren bevorzugten Verfahren wird eine Lage und/oder Position des Behältnisses und/oder des Behältnisverschlusses erfasst. Auf diese Weise kann eine Ebene gebildet werden, in welcher eine Oberfläche des Verschlusses liegt. Durch Ermittlung einer zweiten Ebene, welche die erste Ebene, insbesondere unter einem Winkel von 90° schneidet, kann dann durch eine Vermessung des Verschlusses ein bestimmter Wert, wie beispielsweise ein Durchmesser des Verschlusses ermittelt werden.

Bevorzugt wird die Lage aus dem von dem Behältnisverschluss aufgenommenen Bild ermittelt. Bevorzugt wird auch der Messwert aus diesem Bild oder unter Zuhilfenahme dieses Bildes ermittelt.

Bei einem weiteren bevorzugten Verfahren wird ein geometrischer Mittelpunkt des Behältnisverschlusses ermittelt. Besonders bevorzugt wird dieser geometrische Mittelpunkt aus dem oder den von den Behältnisverschlüssen aufgenommenen Bildern ermittelt.

Bevorzugt wird ein Durchmesser des Behältnisverschlusses unter Berücksichtigung von dessen Mittelpunkt ermittelt. Bevorzugt wird die oben erwähnte Ebene, welche die horizontale Ebene schneidet, derart gewählt, dass sie durch den Mittelpunkt des Behältnisverschlusses verläuft.

Bei einem weiteren bevorzugten Verfahren handelt es sich bei dem Messwert um einen Durchmesser des einen Behältnis angeordneten Verschlusses bzw. um einen Messwert, der für diesen Durchmesser charakteristisch ist. Besonders bevorzugt handelt es sich bei dem Messwert um einen in einer vorgegebenen Höhe des Behältnisverschlusses ermittelten Durchmesser des Behältnisverschlusses.

Bevorzugt wird der Durchmesser mit einer Genauigkeit bestimmt, die geringer ist als 0,5 mm bevorzugt geringer als 0,4 mm bevorzugt geringer als 0,3 mm, bevorzugt geringer als 0,2 mm, besonders bevorzugt geringer als 0,1 mm.

Besonders bevorzugt wird ein Durchmesser an einer Stelle des Verschlusses bestimmt und unterstellt, dass der Durchmesser einen im wesentlichen kreisförmigen Querschnitt aufweist. Unter einem kreisförmigen Querschnitt werden auch Querschnitte verstanden, die etwa einen welligen Außenquerschnitt aufweisen, wie insbesondere aber nicht ausschließlich im Fall von Kronkorken.

Es wäre jedoch auch denkbar, den Durchmesser an zwei Stellen des Behältnisverschlusses zu bestimmen, beispielsweise anhand zweier Linien, die jeweils durch den ermittelten Mittelpunkt des Behältnisverschlusses verlaufen und die sich unter einem Winkel von 90° schneiden.

Bei einer bevorzugten Ausführungsform sind (wenigstens) zwei Bildaufnahmeeinrichtungen und insbesondere zwei Kameras vorgesehen. Diese zwei Kameras sind (hinsichtlich ihrer Blickrichtung um einen vorgegebenen Winkel zueinander versetzt. Dieser Winkel liegt bevorzugt zwischen 100° und 200°, bevorzugt zwischen 120° und 180°, bevorzugt zwischen 140° und 160° und besonders bevorzugt bei ca. 150°.

Damit kann man mittels zwei Stellen des Behältnisverschlusses, beispielsweise anhand zweier Ebenen die jeweils durch den Mittelpunkt laufen und sich bevorzugt unter einem Winkel von mindestens 20°, bevorzugt von mindestens 30°, bevorzugt von mindestens 50°, bevorzugt von mindestens 60°, bevorzugt von mindeste4ns 70°, bevorzugt von mindestens 80° und besonders von mindestens 90° schneiden, messen.

Einen weiteren bevorzugten Verfahren wird eine Position des verschlossenen Behältnisses erfasst und es wird bevorzugt der Messwert unter Berücksichtigung dieser Position ermittelt. Dabei wird besonders bevorzugt die Position des Behältnisses in ihrer Transportrichtung erfasst. Besonders bevorzugt wird jedoch auch die Position des Behältnisses und/oder des Behältnisverschlusses in einer Richtung senkrecht zur Transportrichtung erfasst.

Besonders bevorzugt wird sowohl die Position des Behältnisses bzw. des Behältnisverschlusses als auch der Messwert aus den von den wenigstens zwei und bevorzugt den von den wenigstens drei Bildaufnahmeeinrichtungen aufgenommenen Bildern ermittelt.

Bei einer weiteren bevorzugten Verfahren wird der Messwert unter Berücksichtigung dieser Position bestimmt.

Dabei ist es möglich, dass aus einem aufgenommenen Bild des Behältnisses zunächst die Position des Behältnisses und/oder des Behältnisverschlusses erfasst wird und anhand dieser erfassten Position der Wert beispielsweise für den Durchmesser bestimmt wird.

Bevorzugt wird anhand der erfassten Position die oben besagte Ebene durch die Verschlussebene gelegt, insbesondere durch eine obere abschließende Wandung des Verschlusses. Bevorzugt wird in diesem Bild oder anhand dieser Ebene ein Mittelpunkt des Behältnisverschlusses bestimmt. In einem weiteren Schritt wird eine zweite Ebene, welche schräg oder senkrecht zu der besagten Ebene verläuft, derart gelegt, dass sie durch einen Mittelpunkt des Verschlusses verläuft. Anhand dieser Schnittebene genauer der sich ergebenden Schnittlinie werden dann bevorzugt ein oder mehrere Randpunkte des Behältnisverschlusses bestimmt. Mittels dieses Randpunkte kann dann bevorzugt der Durchmesser ermittelt werden.

Bei einem weiteren bevorzugten Verfahren werden für eine Vielzahl der Behältnisverschlüsse Messwerte gespeichert und/oder protokolliert. So kann beispielsweise für eine Vielzahl von aufgenommenen Verschlüssen jeweils der Durchmesser des Verschlusses gespeichert und/oder protokolliert werden. Dabei kann besonders bevorzugt dieser gemessene Wert, insbesondere ein Durchmesser jeweils auch den entsprechenden Verschließeinheiten zugeordnet werden.

Bei einem weiteren bevorzugten Verfahren werden inspizierte Behältnisse, insbesondere in Abhängigkeit von einem Inspektionsergebnis oder einem gemessenen Messwert ausgeleitet. So können etwa Behältnisse ausgeleitet werden, wenn sich ergibt, dass ein Durchmesser des Behältnisverschlusses außerhalb eines Toleranzfensters liegt, so dass das Behältnis nicht ordnungsgemäß verschlossen ist.

Bevorzugt werden die ermittelten Messwerte mit Referenzwerten verglichen. So können etwa gemessene Durchmesser von Behältnisverschlüssen mit (gespeicherten) Referenzwerten verglichen werden.

Besonders bevorzugt wird das hier beschriebene Verfahren wenigstens zu einem Produktionsbeginn oder nach einem Produktwechsel durchgeführt. So kann beispielsweise eine Protokollierung der durchgeführten Messergebnisse erfolgen beispielsweise in der Art eines Laborqualitätsprotokolls.

Besonders bevorzugt wird gesamte Produktion (insbesondere kontinuierlich) überwacht werden. Es wäre jedoch auch möglich, dass die Produktion stichprobenartig überwacht wird.

Bei einen weiteren bevorzugten Verfahren werden die Messungen bzw. die Inspektionen mit einer Zeitangabe protokolliert und/oder gespeichert. Auf diese Weise kann auch zu einem späteren Zeitpunkt noch nachvollzogen werden, wann und an welchen Behältnissen oder Behältnisverschlüssen die jeweiligen Messungen durchgeführt wurden.

Besonders bevorzugt wird wenigstens ein Messwert und werden allgemein Messergebnisse an dem Behältnis angebracht (etwa aufgedruckt) bzw. es wird bevorzugt an einem Behältnis wenigstens eine Kennzeichnung angebracht, welche für ein wenigstens ein Messergebnis und/oder wenigstens einen Messwert charakteristisch ist. Weiterhin ist es möglich, derart inspizierte und gekennzeichnete Behältnisse als Rückstellmuster zu lagern und/oder (etwa auf ein Laborband oder ähnliches) auszuleiten.

Bei einem weiteren bevorzugten Verfahren wird die Verschließvorrichtung und/oder wenigstens eine Verschließeinheit in Reaktion auf einen gemessenen Messwert und/oder unter Berücksichtigung dieses Messwerts gesteuert und bevorzugt geregelt. So kann beispielsweise eine closed loop Funktion zu der Verschließeinrichtung oder den einzelnen Verschließeinheiten eingerichtet sein. Auch wäre es möglich, dass eine Produktion bei nicht erreichen von Qualitätsrichtlinien angehalten bzw. gestoppt wird.

Bei einem weiteren bevorzugten Verfahren wird der Messwert an einem Bereich des Behältnisverschlusses ermittelt, der die Behältnismündung umgibt. Bevorzugt weist der Behältnisverschluss einen Abschnitt bzw. Bereich auf, der eine Behältnisöffnung abdeckt und einen zweiten Bereich, der die Behältnismündung umgibt. An diesem zweiten Bereich wird besonders bevorzugt die Messung (zur Bestimmung des Messwerts) durchgeführt.

Besonders bevorzugt wird im Falle eines Kronkorkens der Messwert an einer Unterkante der jeweiligen Zacken ermittelt. Es wäre jedoch auch möglich, den Durchmesser an Zackentälern zwischen den Zacken oder einen Durchmesser oberhalb der Zacken zu ermitteln. Die Messung in diesem unteren Bereich hat den Vorteil, dass beispielsweise bei einer Inspektion von oben immer dann, wenn nicht exakt mittig unterhalb der Kamera gemessen wird die Zacken abgeschattet werden und man so den richtigen Durchmesser nicht messen oder nur schwer messen kann.

Bevorzugt ist der Radius oder der Durchmesser an der Zackenunterkante des Verschlusses die ausschlaggebende Position für die Frage, ob das Behältnis richtig, d. h. nicht zu locker, und nicht zu fest verschlossen ist.

Besonders bevorzugt wird die Dimension der Zackentäler und/ oder Zacken ermittelt sowie deren Abstand zueinander. Bevorzugt werden die Zackenabstände zueinander an der Zackenunterkante festgestellt.

Bei einem weiteren bevorzugten Verfahren weist die Vorrichtung wenigstens drei bevorzugt wenigstens vier Bildaufnahmeeinrichtungen auf und/oder der Behältnisverschluss wird mit mindestens drei und bevorzugt mindestens vier Bildaufnahmeeinrichtungen inspiziert.

Besonders bevorzugt werden die wenigstens zwei bevorzugt die wenigstens drei Bildaufnahmeeinrichtungen zueinander kalibriert. Insbesondere werden die wenigstens zwei und insbesondere die wenigstens drei Bildaufnahmeeinrichtungen hinsichtlich ihrer Position und/oder hinsichtlich ihrer Ausrichtung kalibriert. Zu diesem Zweck kann beispielsweise ein Kalibrierkörper vorgesehen sein, der im Zentrum zwischen den Bildaufnahmeeinrichtungen angeordnet wird. Die Kalibrierung kann dann in der Weise erfolgen, dass die Bilder der Bildaufnahmeeinrichtungen jeweils in gleicher Weise den Kalibrierkörper (jedoch aus unterschiedlichen Richtungen) erfassen.

Bei einem weiteren bevorzugten Verfahren wird die Position des Behältnisses in einem Weltkoordinatensystem (bzw. einem übergeordneten und insbesondere stationären Koordinatensystem) bestimmt. Besonders bevorzugt geschieht dies mithilfe von zueinander kalibrierten Bildaufnahmeeinrichtungen. In diesem Falle ist die Aufnahme eines Panoramabildes nicht unbedingt nötig.

Wenn die Position des Behältnisses in einem Weltkoordinatensystem bekannt ist, können auch die Koordinaten der Zackenunterkanten in diesem Weltkoordinatensystem bestimmt werden. Hieraus kann wiederum der Durchmesser des Behältnisverschluss bestimmt werden.

Bei einem weiteren bevorzugten Verfahren weist der Behältnisverschluss einen Abdeckebereich und/oder eine Abdeckebene auf, welche eine Öffnung des Behältnisses abdeckt sowie einen umlaufenden Rand, welcher die Mündung des Behältnisses (bevorzugt vollständig) umgibt und der besagte Messwert wird bezüglich dieses umlaufenden Randes ermittelt. Die Größe der Abdeckebene wird durch den Verschließvorgang nicht beeinflusst aber der Durchmesser des umlaufenden Randes kann ein deutliches Indiz für die Güte des Verschlusses des Behältnisses sein.

Bei einem weiteren bevorzugten Verfahren werden die Behältnisverschlüsse beleuchtet und werden insbesondere mittels wenigstens einer und bevorzugt genau einer Beleuchtungseinrichtung beleuchtet, welche bevorzugt oberhalb der Behältnisse angeordnet ist. Besonders bevorzugt wird daher die Inspektion der Behältnisverschlüsse in einem Auflichtverfahren vorgenommen. Bevorzugt handelt es sich bei der Beleuchtungseinrichtung um eine Beleuchtungseinrichtung, welche diffuses Licht abgibt. Bevorzugt wird die Beleuchtung der Behältnisverschluss mit einer Bildaufnahme durch die Inspektionseinrichtung getriggert.

Bevorzugt werden die Bildaufnahmen mit den wenigstens zwei und bevorzugt mit den wenigstens drei Bildaufnahmeeinrichtungen gleichzeitig durchgeführt.

Besonders bevorzugt wird eine ungefähre Position der Behältnisse bestimmt und anschließend durch diese ungefähre Positionsbestimmung eine Inspektion und/oder eine Bildaufnahme ausgelöst. So kann beispielsweise eine Lichtschranke vorgesehen sein, welche die Bildaufnahme bzw. die Inspektion triggert und/oder auslöst.

Die vorliegende Erfindung ist weiterhin auf ein Verfahren zum Inspizieren von mit Behältnisverschlüssen versehenen Behältnissen gerichtet, wobei sich bei den Behältnisverschlüssen um Kronkorken oder um Schraubverschlüsse handelt und wobei eine Transporteinrichtung, die mit den Behältnisverschlüssen versehenen Behältnisse in einer Transportrichtung transportiert und eine Inspektionseinrichtung die mit den Behältnisverschlüssen versehenen Behältnisse inspiziert.

Erfindungsgemäß weist die Inspektionseinrichtung wenigstens zwei Bildaufnahmeeinrichtungen und bevorzugt wenigstens drei Bildaufnahmeeinrichtungen auf, welche jeweils von wenigstens einigen der Behältnisse und bevorzugt von jedem Behältnis wenigstens ein ortsaufgelöstes Bild aufnehmen wobei eine Auswerteeinrichtung die aufgenommenen Bilder auswertet und aus den Bildern wenigstens einen Messwert ableitet und/oder bestimmt, wobei dieser Messwert für die an den Behältnissen angeordneten Behältnisverschlüsse charakteristisch ist und insbesondere für wenigstens eine physikalische Eigenschaft und insbesondere eine geometrische Eigenschaft dieser Behältnisverschlüsse wie insbesondere einen Durchmesser der Behältnisverschlüsse charakteristisch ist.

Bevorzugt werden die oben beschriebenen Verfahrensschritte durchgeführt.

Die vorliegende Erfindung ist weiterhin auf eine Vorrichtung zum Behandeln von mit Behältnisverschlüssen versehenen Behältnissen gerichtet mit einer Transporteinrichtung, welche zum Transportieren von mit einem Medium und insbesondere einer Flüssigkeit befüllten Behältnissen geeignet und bestimmt ist und mit einer Verschließvorrichtung, welche dazu geeignet und bestimmt ist, diese Behältnisse jeweils mit Behältnisverschlüssen zu versehen, wobei sich bei diesem Behältnisverschlüssen um Kronkorken oder um Schraubverschlüsse handelt. Dabei weist die Verschließvorrichtung wenigstens zwei Verschließeinheiten auf, welche jeweils dazu geeignet und bestimmt sind, die Behältnisverschlüsse an den Behältnissen anzubringen und es ist weiterhin eine in der Transportrichtung nach der Verschließvorrichtung angeordnete Inspektionseinrichtung vorgesehen, welche dazu geeignet und bestimmt ist, die mit den Verschlüssen versehenen Behältnisse zu inspizieren. Bevorzugt ist diese Inspektionseinrichtung dazu geeignet und bestimmt, die mit den Behältnisverschlüssen versehenen Behältnisse und/oder diese Behältnisverschlüsse während deren Bewegung zu inspizieren.

Erfindungsgemäß weist Inspektionsvorrichtung wenigstens zwei und bevorzugt wenigstens drei Bildaufnahmeeinrichtungen auf, welche dazu geeignet und bestimmt sind, von mehreren und bevorzugt von jedem Behältnis wenigstens ein ortsaufgelöstes Bild aufzunehmen und es ist eine Auswerteeinrichtung vorgesehen, die dazu geeignet und bestimmt ist, die aufgenommenen Bilder auszuwerten und aus den Bildern wenigstens einen Messwert zu bestimmen, wobei dieser Messwert für die an den Behältnissen angeordneten Behältnisverschlüsse charakteristisch ist.

Bevorzugt ist die hier beschriebene Vorrichtung dazu geeignet und bestimmt das oben beschriebene Verfahren durchzuführen.

Besonders bevorzugt weist die Vorrichtung eine Zuordnungseinrichtung auf, welche dazu geeignet und bestimmt ist, dem oder den Messwerten und/oder einem von wenigstens einer Bildaufnahmeeinrichtung aufgenommen Bild eines Behältnisverschlusses diejenige Verschließeinheit zuzuordnen, welche das Behältnis mit dem inspizierten Behältnisverschluss verschlossen hat und/oder welche diesen Behältnisverschluss an dem Behältnis angeordnet hat.

Bei einer weiteren bevorzugten Ausführungsform weist die Vorrichtung eine Positionsbestimmungseinrichtung auf, welche dazu geeignet und bestimmt ist, eine Position des verschlossenen bzw. des mit dem Behältnisverschluss versehenen Behältnisses zu erfassen.

Bevorzugt erfolgt die Positionsbestimmung mittels der zwei und bevorzugt wenigstens drei Bildaufnahmeeinrichtungen. In einer alternativen Ausführungsform erfolgt die Positionsbestimmung mittels einer konzentrisch über dem Behälterverschluss angebrachten Kamera.

Besonders bevorzugt ist die Auswerteeinrichtung dazu geeignet und bestimmt, unter Berücksichtigung der erfassten Position den genannten Messwert zu bestimmen.

Bei einer weiteren bevorzugten Ausführungsform weist die Vorrichtung eine Beleuchtungseinrichtung auf, welche zur Beleuchtung des mit dem Behältnisverschluss verschlossenen Behältnisses und insbesondere auch zur Beleuchtung des Behältnisverschlusses geeignet und bestimmt ist.

Die vorliegende Erfindung ist weiterhin auf eine Vorrichtung zum Inspizieren von mit Behältnisverschlüssen versehenen Behältnissen gerichtet, wobei sich bei den Behältnisverschlüssen um Kronkorken oder um Schraubverschlüsse handelt. Diese Vorrichtung weist eine Transporteinrichtung auf, welche dazu geeignet und bestimmt ist, die mit den Verschlüssen versehenen Behältnisse in einer Transportrichtung zu transportieren sowie eine Inspektionseinrichtung, die dazu geeignet und bestimmt ist, mit den Behältnisverschlüssen versehene Behältnisse und insbesondere die Behältnisverschlüsse zu inspizieren.

Besonders bevorzugt weist die Inspektionseinrichtung wenigstens zwei und bevorzugt wenigstens drei Bildaufnahmeeinrichtungen auf, welche dazu geeignet und bestimmt ist bzw. sind, von mehreren und bevorzugt von jedem (mit einem Behältnisverschluss versehenen) Behältnis wenigstens ein ortsaufgelöstes Bild aufzunehmen. Weiterhin ist eine Auswerteeinrichtung vorgesehen, die dazu geeignet und bestimmt ist, die aufgenommenen Bilder auszuwerten und aus den Bildern wenigstens einen Messwert zu bestimmen und/oder zu ermitteln, wobei dieser Messwert für die an den Behältnissen angeordneten Behältnisverschlüsse charakteristisch ist.

Besonders bevorzugt sind die beiden bzw. die wenigstens drei Bildaufnahmeeinrichtungen aufeinander synchronisiert, derart, dass sie jeweils zur gleichen Zeit Bilder aufnehmen.

Besonders bevorzugt beobachten die wenigstens zwei und bevorzugt die wenigstens drei Bildaufnahmeeinrichtungen das mit dem Behältnisverschluss versehene Behältnis aus zwei unterschiedlichen Richtungen.

Bei einer weiteren vorteilhaften Ausführungsform die Vorrichtung eine Markierungseinrichtung zur Markierung der inspizierten Behältnisse auf, wobei diese Markierungseinrichtung bevorzugt dazu geeignet und bestimmt ist, an den Behältnissen eine Markierung anzubringen, welche einen Rückschluss auf den bezüglich dieses Behältnisses ermittelten Messwert ermöglicht.

Bei einer weiteren bevorzugten Ausführungsform weist die Vorrichtung wenigstens ein Hintergrundelement auf, welches von wenigstens einer Bildaufnahmeeinrichtung beobachtbar ist. Besonders bevorzugt ist jeder Bildaufnahmeeinrichtung ein Hintergrundelement zugeordnet, welches von dieser Bildaufnahmeeinrichtung optisch erfassbar ist.

Bevorzugt ist an wenigstens einer Bildaufnahmeeinrichtung und bevorzugt an jeder Bildaufnahmeeinrichtung ein solches Hintergrundelement angeordnet, welches jeweils von einer gegenüberliegenden Bildaufnahmeeinrichtung erfassbar ist und auf diese Weise dieser Bildaufnahmeeinrichtung zugeordnet ist.

Bevorzugt sind die jeweiligen Hintergrundelemente derart abgeordnet, dass das zu inspizierende Behältnis zwischen der Bildaufnahmeeinrichtung und dem dieser Bildaufnahmeeinrichtung zugeordneten Hintergrundelement angeordnet ist.

Dieses Hintergrundelement ist bevorzugt homogen gestaltet. Bevorzugt ist das Hintergrundelement wenigstens abschnittsweise in weißer Farbe gehalten und bevorzugt homogen in weißer Farbe gehalten.

Weitere Vorteile und Ausführungsformen ergeben sich aus den beigefügten Zeichnungen. Darin zeigen:
- Fig. 1: eine schematische Darstellung einer erfindungsgemäßen Vorrichtung;
- Fig. 2: eine Darstellung einer Bildaufnahme mit drei Bildaufnahmeeinrichtungen;
- Fig. 3: eine Seitenansicht einer Bildaufnahme mit drei Bildaufnahmeeinrichtungen;
- Fig. 4: Bilder von aufgenommenen Behältnisverschlüssen;
- Fig. 5: Bilder von aufgenommenen Behältnisverschlüssen;
- Fig. 6: eine Darstellung einer Bildaufnahme mit vier Bildaufnahmeeinrichtungen;
- Fig. 7: eine Seitenansicht einer Bildaufnahme mit vier Bildaufnahmeeinrichtungen;
- Fig. 8: eine Darstellung einer Insepktionsvorrichtung; und
- Fig. 9: eine blockdiagrammartige Darstellung eines erfindungsgemäßen Verfahrens.

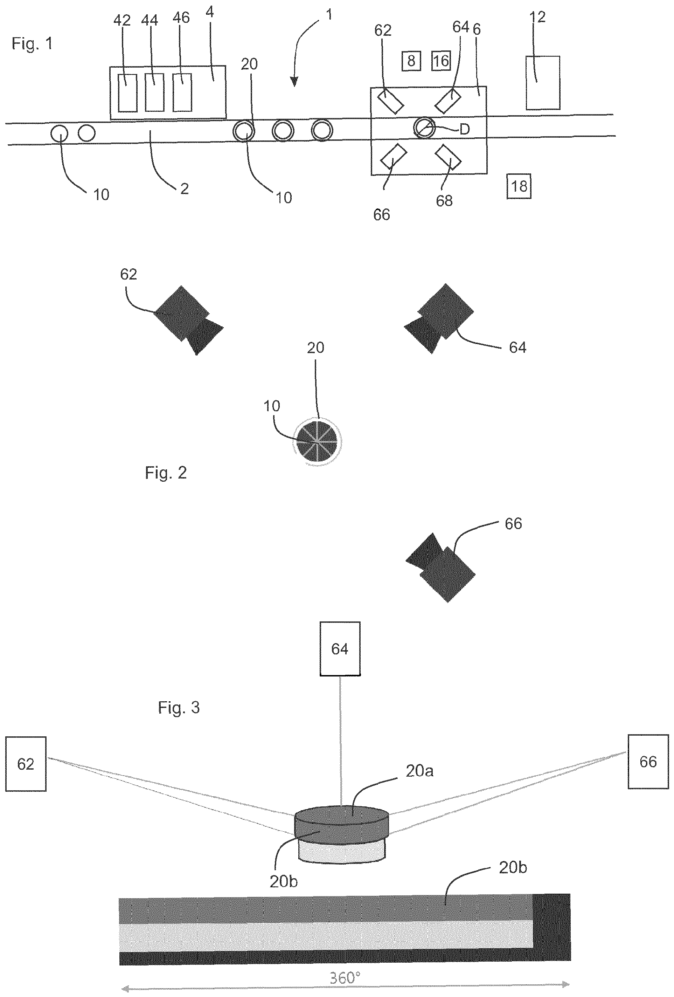

Fig. 1 zeigt eine schematische Darstellung einer erfindungsgemäßen Vorrichtung 1. Diese weist eine Transporteinrichtung 2 auf, welche Behältnisse 10 transportiert. Obwohl nicht dargestellt, setzt sich diese Transporteinrichtung 2 bevorzugt aus einer Vielzahl von Transporteinheiten zusammen, die sich bevorzugt aneinander anschließen. Anders als gezeigt, werden die Behältnisse bevorzugt nicht durchgehend geradlinig transportiert sondern bevorzugt zumindest teilweise auch auf einer kreissegmentförmigen Transportstrecke.

Diese Behältnisse sind, wie in Fig. 1 auf der linken Seite gezeigt, zunächst noch unverschlossen aber bereits befüllt.

Das Bezugszeichen 4 kennzeichnet eine Verschließvorrichtung. Diese weist mehrere Verschließeinheiten 42, 44, 46 auf, welche die einzelnen Behältnisse jeweils mit Behältnisverschlüssen 20 versehen, wie seitlich rechts neben der Verschließvorrichtung 4 gezeigt.

Die mit den Behältnisverschlüssen versehenen Behältnisse 10 werden zu einer Inspektionseinrichtung 6 transportiert, die hier vier Bildaufnahmeeinrichtungen 62, 64, 66, 68 aufweist, welche bevorzugt zeitgleich Bild der an den Behältnissen angeordneten Behältnisverschlüsse 20 aufnehmen.

Das Bezugszeichen 8 kennzeichnet eine Zuordnungseinrichtung, welche jedem Behältnis und/oder jedem von einem Behältnis und/oder von einem Behältnisverschluss aufgenommenen Bild diejenige Verschließeinheit 42, 44, 46 zuordnet, welche dieses Behältnis verschlossen hat.

Das Bezugszeichen 16 kennzeichnet schematisch eine Auswerteeinrichtung, welche zum Auswerten der von den Bildaufnahmeeinrichtungen aufgenommenen Bilder dient. Dabei ist es möglich, dass diese Auswerteeinrichtung die aufgenommenen Bilder zu einem Panoramabild zusammensetzt.

Bevorzugt bestimmt die Auswerteeinrichtung auch eine genaue Position des Behältnisverschlusses (innerhalb des Bildes). Weiterhin ermittelt die Auswerteeinrichtung 16 bevorzugt eine für den Behältnisverschluss charakteristische Größe und insbesondere dessen Durchmesser D.

Das Bezugszeichen 18 kennzeichnet eine Speichereinrichtung in der ermittelte Messwerte, insbesondere mit einer Zuordnung zu den einzelnen Verschließeinheiten 42, 44, 46 und/oder mit einer zeitlichen Angabe gespeichert werden.

Das Bezugszeichen 12 kennzeichnet eine Ausleiteinrichtung, welche dazu geeignet und bestimmt ist, einzelne Behältnisse aus dem Transportpfad auszuleiten. Bevorzugt erfolgt diese Ausleitung in Reaktion auf einen von der Inspektionseinrichtung ermittelten Messwert.

Fig. 2 zeigt eine Inspektion, die hier mit drei Bildaufnahmeeinrichtungen 62, 64, 66 durchgeführt wird.

Eine der drei Bildaufnahmeeinrichtungen, hier die Bildaufnahmeeinrichtung 64 ermöglicht hier die exakte Bestimmung der Position des Behältnisses 10.

Bevorzugt erfolgt Anpassung einer Ebene (der Bildaufnahme) an den Kronkorken, wodurch schiefe Hälse kompensiert werden können. Dies bedeutet, dass bevorzugt berücksichtigt werden kann, dass die Ebenen der Behältnisverschlüsse nicht genau in einer horizontalen Ebene liegen.

Durch die exakte Positionsmessung des Behältnisses ist eine Vermessung eines Durchmessers des Behältnisverschlusses wie eines Kronkorkens möglich. In einem Ausführungsbeispiel müssen die Behältnisverschlüsse einen Durchmesser zwischen 28,58mm und 28,75mm aufweisen, wenn sie korrekt appliziert wurden.

Ausgehend von den so bestimmten Messwerten ist eine Erweiterung des Füller- und/oder Verschließvorrichtungsmanagements möglich. Insbesondere können die einzelnen Verschließeinheiten der Verschließvorrichtung unter Berücksichtigung der Messwerte gesteuert und/oder geregelt werden.

Wie oben erwähnt, findet bevorzugt eine Organzuordnung des Kronkorkendurchmessers statt, d.h. den einzelnen gemessenen Durchmessern werden bevorzugt diejenigen Verschließeinheiten zugeordnet, welche den betreffenden Behältnisverschluss an dem Behältnis angebracht haben.

Fig. 3 zeigt schematisch eine Bildaufnahme eines Behältnisverschlusses 20 mittels dreier Bildaufnahmeeinrichtungen. Der Behältnisverschluss 20 weist dabei einen Abdeckabschnitt 20a und einen umlaufenden Abschnitt 20b auf.

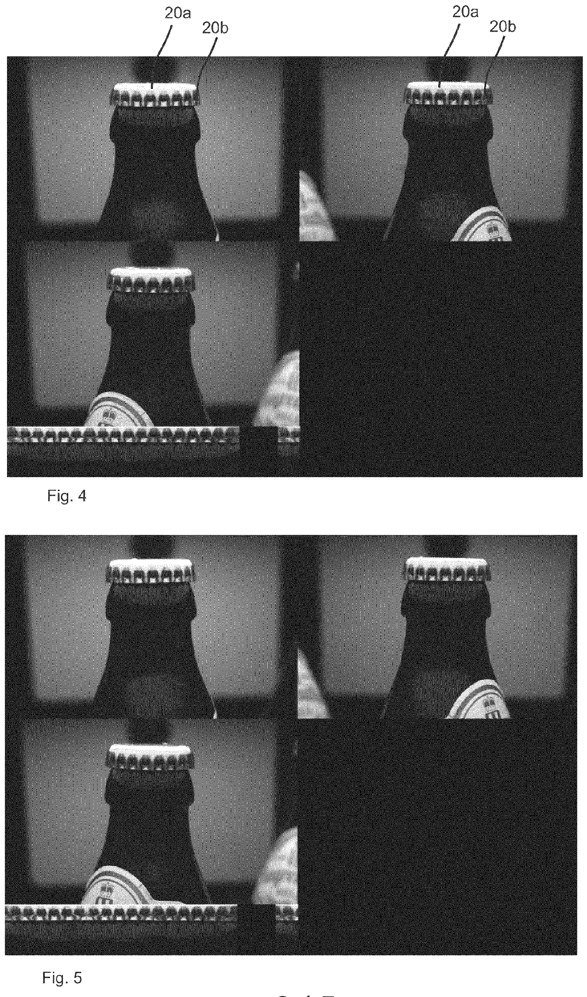

Die Fig. 4 und 5 zeigen jeweils aufgenommene Bilder von an Behältnissen angeordneten Behältnisverschlüssen. Dabei ist jeweils der Abdeckabschnitt 20a des Behältnisverschlusses 20 erkennbar, welcher die Öffnung des Behältnisses 20 abdeckt sowie auch der Umfangsrand 20b, der die Mündung des Behältnisses umgibt. Bevorzugt wird der Durchmesser im Bereich des Umfangsrandes bestimmt und insbesondere im Bereich der Enden 20c der einzelnen Zacken des Kronkorkens. Dieser gezackte Bereich des Kronkorkens ist auch in der Abwicklung 22 erkennbar.

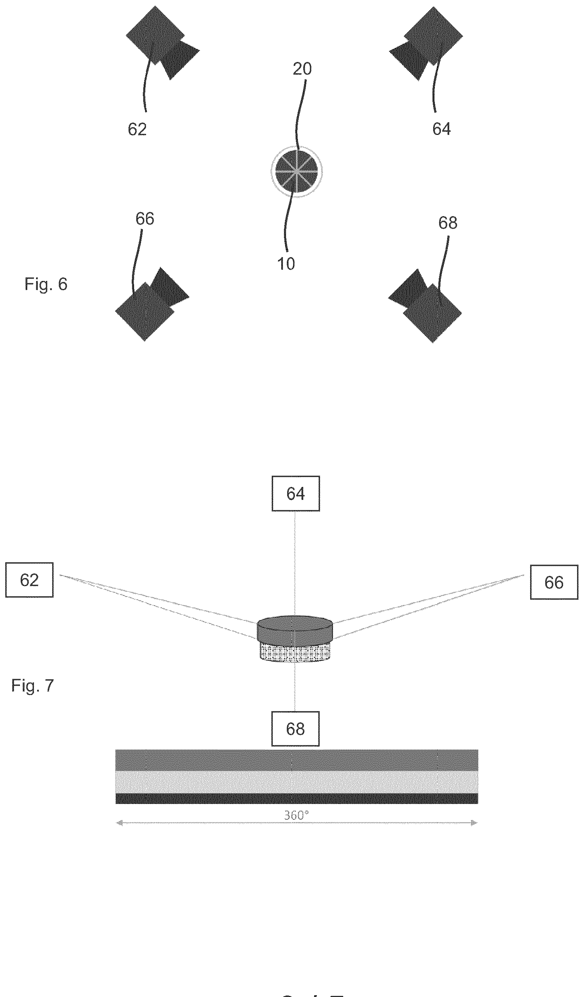

Fig. 6 zeigt eine Ausgestaltung, bei der die Inspektion mit vier Bildaufnahmeeinrichtungen 62, 64, 66, 68 erfolgt. Mittels 4 Bildaufnahmeeinrichtungen ist es möglich einen Bereich von viermal 90° abzuwickeln. Man erhält eine Abwicklung ohne Totbereich. Wie in Fig. 7 gezeigt, sind in diesem Fall die vier Bildaufnahmeeinrichtungen 62, 64, 66. 68 gleichmäßig um den Behältnisverschluss 20 herum angeordnet und beobachten diesen schräg von oben.

Bei Verwendung von 4 Bildaufnahmeeinrichtung ist die exakteste Positionsbestimmung möglich. Daneben ist eine Anpassung einer Ebene an den Behältnisverschluss und insbesondere einen Kronkorken am robustesten. Es ergibt sich so eine sehr präzise Bestimmung des Durchmessers des Behältnisverschlusses und insbesondere Kronkorkendurchmessers.

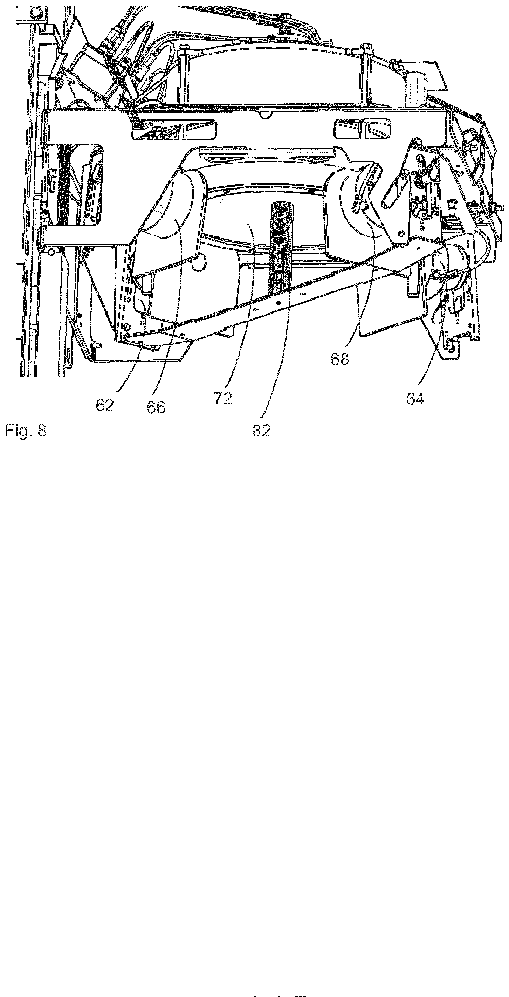

Fig. 8 zeigt eine Inspektionsvorrichtung 6. Hier sind die einzelnen Bildaufnahmeeinrichtungen 62, 64, 66, 68 dargestellt.

Das Bezugszeichen 72 kennzeichnet eine Beleuchtungseinrichtung, welche bevorzugt symmetrisch bezüglich eines geometrischen Mittelpunkts zwischen den Bildaufnahmeeinrichtungen angeordnet ist- Weiterhin ist diese Beleuchtungseinrichtung oberhalb der zu inspizierenden Behältnisse (nicht gezeigt) angeordnet.

Das Bezugszeichen 82 kennzeichnet einen Kalibrierkörper, der zum Kalibrieren der einzelnen Bildaufnahmeeinrichtungen (insbesondere bezüglich einander) dient. Im Arbeitsbetrieb wird der Kalibrierkörper entfernt.

Bevorzugt sind an den einzelnen Bildaufnahmeeinrichtungen 62, 64, 66, 68 jeweils Hintergrundelemente bzw. Hintergrundscheiben 92, 94, 96, 98 angeordnet. Diese Hintergrundelemente dienen jeweils zur Verbesserung der Bildaufnahme durch die jeweils gegenüberliegende Bildaufnahmeeinrichtung.

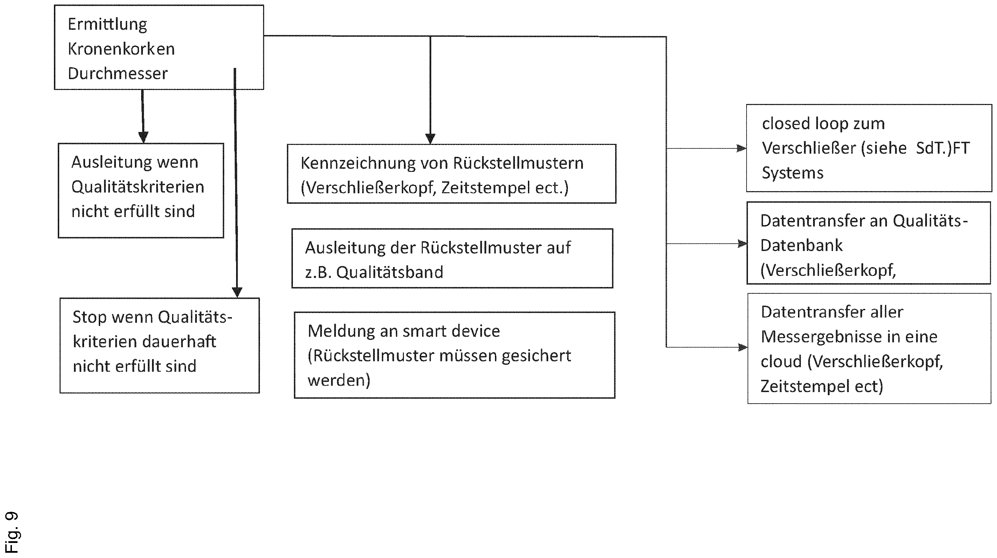

Fig. 9 zeigt eine Darstellung zur Veranschaulichung der Behältnisbehandlung. Dabei wird zunächst der Durchmesser des Behältnisverschlusses, in diesem Fall eines Kronkorkens ermittelt. Der ermittelte Durchmesser wird bevorzugt mit einem Sollwert vergleichen. Falls der ermittelte Durchmesser von dem Sollwert abweicht und insbesondere außerhalb eines um den Sollwert gebildeten Toleranzfensters liegt, wird das betreffende Behältnis ausgeleitet.

Falls festgestellt wird, dass beispielsweise für eine Vielzahl von Behältnissen die Sollwerte für den Durchmesser der Behältnisverschlüsse nicht erfüllt werden oder beispielsweise für sämtliche Behältnisse, die von einer bestimmten Verschließeinheit verschlossen wurden, kann ein Maschinenstopp eingeleitet werden. Es wäre jedoch auch möglich, die betreffende Verschließeinheit zu deaktivieren derart, dass von dieser Verschließeinheit bis zur nächsten Wartungspause keine Behältnisse verschlossen werden.

Daneben kann das inspizierte Behältnis mit dem gemessenen Durchmesser markiert werden. Dabei kann in dieser Markierung auch die Verschließeinheit, welche dieses Behältnis verschlossen hat, gekennzeichnet werden. Daneben kann mit der Markierung auch ein Zeitstempel aufgebracht werden.

Bevorzugt wird ein derart markiertes Behältnis ausgeleitet, etwa damit es als Rückstellmuster zur Verfügung steht. Diese Ausleitung kann etwa auf ein Qualitätsband erfolgen.

Bevorzugt kann diese Ausleitung an eine Steuerungseinrichtung (smart device) gemeldet werden, damit eine Sicherung der Rückstellmuster erfolgen kann.

Weiterhin kann unter Verwendung des ermittelten Durchmessers auch die Verschließvorrichtung gesteuert werden und es können insbesondere die einzelnen Verschließeinheiten der Verschließvorrichtung gesteuert und insbesondere geregelt werden. Fall beispielsweise festgestellt wird, dass die Durchmesser derjenigen Behältnisverschlüsse, welche von einer bestimmten Verschließeinheit an den Behältnissen angeordnet wurden stets um ein bestimmtes Mass von einem Solldurchmesser abweichen, kann diese spezielle Verschließeinheit nachgeregelt werden.

Weiterhin ist es auch möglich, dass die gemessenen Durchmesser an eine Datenbank weitergeleitet werden, insbesondere eine Qualitätsdatenbank. Auf diese Weise ist auch eine langfristige Überwachung der Qualitätsbedingungen möglich.

Weiterhin können auch alle gemessenen Daten, d.h. sämtliche Inspektionsergebnisse an eine Datenbank, weitergeleitet werden. Auf diese Weise kann eine kontinuierliche Überwachung aller Verschließeinheiten durchgeführt werden. Auch kann auf diese Weise eine maschinenübergreifende Qualitätskontrolle stattfinden.

Die Messwerte können (bevorzugt auch mit einem Zeitstempel) in einer Cloud abgelegt werden.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Behandeln von mit Behältnisverschlüssen (20) versehenen oder zu versehenden Behältnissen (10), wobei befüllte Behältnisse (10) transportiert werden und eine Verschließvorrichtung (4) diese Behältnisse (10) jeweils mit Behältnisverschlüssen (20) versieht, wobei es sich bei diesen Behältnisverschlüssen (20) um Kronkorken oder um Schraubverschlüsse handelt und wobei die Verschließvorrichtung (4) wenigstens zwei Verschließeinheiten (42, 44) aufweist, welche jeweils die Behältnisverschlüsse (20) an den Behältnissen (10) anbringen und wobei eine in einer Transportrichtung nach der Verschließvorrichtung angeordnete Inspektionseinrichtung (6) die mit den Verschlüssen (10) versehenen Behältnisse inspiziert, **dadurch gekennzeichnet, dass**
die Inspektionseinrichtung (6) wenigstens zwei Bildaufnahmeeinrichtungen (62, 64) aufweist, welche jeweils von jedem Behältnis wenigstes ein ortsaufgelöstes Bild aufnehmen und eine Auswerteeinrichtung die aufgenommenen Bilder auswertet und aus den Bildern wenigstens einen Messwert bestimmt, wobei dieser Messwert für die an den Behältnissen angeordneten Behältnisverschlüsse charakteristisch ist.

2. Verfahren nach Anspruch 1,
**dadurch gekennzeichnet, dass**
eine Zuordnungseinrichtung (8) dem Messwert diejenige Verschließereinheit zuordnet, welche das Behältnis mit dem inspizierten Behältnisverschluss verschlossen hat.

3. Verfahren nach wenigstens einem der vorangegangenen Ansprüche,
**dadurch gekennzeichnet, dass**
die wenigstens zwei von den Bildaufnahmeeinrichtungen aufgenommenen Bilder ausgewertet werden, um den Messwert zu bestimmen.

4. Verfahren nach wenigstens einem der vorangegangenen Ansprüche,
**dadurch gekennzeichnet, dass**
der Messwert für einen Durchmesser des an dem Behältnis angeordneten Behältnisverschlusses charakteristisch ist und bevorzugt der Durchmesser mit einer Genauigkeit bestimmt wird, die geringer ist als 0,5mm, bevorzugt geringer als 0,4mm, bevorzugt geringer als 0,3mm, bevorzugt geringer als 0,2mm und besonders bevorzugt geringer als 0,1mm.

5. Verfahren nach wenigstens einem der vorangegangenen Ansprüche,
**dadurch gekennzeichnet, dass**
eine Position des verschlossenen Behältnisses erfasst wird und bevorzugt der Messwert unter Berücksichtigung dieser Position ermittelt wird.

6. Verfahren nach wenigstens einem der vorangegangenen Ansprüche,
**dadurch gekennzeichnet, dass**
der Behältnisverschluss eine Abdeckebene aufweist, welche eine Öffnung des Behältnisses bedeckt sowie einen umlaufenden Rand (20b), welcher die Mündung des Behältnisses umgibt und der Messwert bezüglich dieses umlaufenden Randes (20b) ermittelt wird.

7. Verfahren nach wenigstens einem der vorangegangenen Ansprüche,
**dadurch gekennzeichnet, dass**
die Behältnisverschlüsse (20) beleuchtet werden und insbesondere mittels einer Beleuchtungseinrichtung beleuchtet werden, welche oberhalb der Behältnisse (10) angeordnet ist.

8. Verfahren nach wenigstens einem der vorangegangenen Ansprüche,
**dadurch gekennzeichnet, dass**
die Verschließvorrichtung (4) und/oder wenigstens eine Verschließeinheit unter Berücksichtigung des Messwertes gesteuert wird.

9. Verfahren zum Inspizieren von mit Behältnisverschlüssen versehenen Behältnissen, wobei es sich bei diesen Behältnisverschlüssen (20) um Kronkorken oder um Schraubverschlüsse handelt wobei eine Transporteinrichtung die mit den Verschlüssen versehenen Behältnisse in einer Transportrichtung transportiert und eine Inspektionseinrichtung die mit den Behältnisverschlüssen versehenen Behältnisse inspiziert, **dadurch gekennzeichnet, dass**
die Inspektionseinrichtung (6) wenigstens zwei Bildaufnahmeeinrichtungen (62, 64, 66, 68) aufweist, welche jeweils von jedem Behältnis wenigstes ein ortsaufgelöstes Bild aufnehmen und eine Auswerteeinrichtung die aufgenommenen Bilder auswertet und aus den Bildern wenigstens einen Messwert bestimmt, wobei dieser Messwert für die an den Behältnissen (10) angeordneten Behältnisverschlüsse (20) charakteristisch ist.

10. Vorrichtung zum Behandeln von mit Behältnisverschlüssen versehenen oder zu versehenden Behältnissen, mit einer Transporteinrichtung (2), welche zum Transportieren von mit einem Medium befüllten Behältnissen geeignet und bestimmt ist und mit einer Verschließvorrichtung (4), welche dazu geeignet und bestimmt diese Behältnisse (10) jeweils mit Behältnisverschlüssen (20) zu versehen, wobei es sich bei diesen Behältnisverschlüssen (20) um Kronkorken oder um Schraubverschlüsse handelt und wobei die Verschließvorrichtung (2) wenigstens zwei Verschließeinheiten (42, 44, 46) aufweist, welche jeweils dazu geeignet und bestimmt sind, die Behältnisverschlüsse (20) an den Behältnissen (10) anzubringen und wobei eine in einer Transportrichtung nach der Verschließvorrichtung (4) angeordnete Inspektionseinrichtung (6) vorgesehen ist, welche dazu geeignet und bestimmt ist die mit den Verschlüssen (10) versehenen Behältnisse (10) zu inspizieren,
**dadurch gekennzeichnet, dass**
die Inspektionseinrichtung (6) wenigstens zwei Bildaufnahmeeinrichtungen (62, 64, 66, 68) aufweist, welche dazu geeignet und bestimmt sind von mehreren Behältnissen und bevorzugt von jedem Behältnis (10) wenigstes ein ortsaufgelöstes Bild aufzunehmen und eine Auswerteeinrichtung die dazu geeignet und bestimmt ist, die aufgenommenen Bilder auszuwerten und aus den Bildern wenigstens einen Messwert zu bestimmen, wobei dieser Messwert für die an den Behältnissen (10) angeordneten Behältnisverschlüsse (20) charakteristisch ist.

11. Vorrichtung (1) nach dem vorangegangenen Anspruch,
**dadurch gekennzeichnet, dass**
die Vorrichtung (1) eine Zuordnungseinrichtung (8) aufweist, welche dazu geeignet und bestimmt ist, einem Messwert und/oder einem von wenigstens einer Bildaufnahmeeinrichtung (62, 64, 66, 68) aufgenommen Bild eines Behältnisverschlusses (20) diejenige Verschließeinheit (42, 44, 46), welche diesen Behältnisverschluss (20) an dem Behältnis (10) angeordnet hat, zuzuordnen.

12. Vorrichtung (1) nach wenigstens einem der vorangegangenen Ansprüche 9 - 10,
**dadurch gekennzeichnet, dass**
die Vorrichtung (1) eine Positionserfassungseinrichtung aufweist, welche dazu geeignet und bestimmt ist, eine Position der mit den Behältnisverschlüssen (20) versehenen Behältnisse (10) zu erfassen.

13. Vorrichtung zum Inspizieren von mit Behältnisverschlüssen versehenen Behältnissen, wobei es sich bei diesen Behältnisverschlüssen (20) um Kronkorken oder um Schraubverschlüsse handelt mit einer Transporteinrichtung (2) welche dazu geeignet und bestimmt ist, die mit den Behältnisverschlüssen (20) versehenen Behältnisse (10) in einer Transportrichtung zu transportieren und eine Inspektionseinrichtung (6) die dazu geeignet und bestimmt ist, mit den Behältnisverschlüssen (20) versehene Behältnisse (10) zu inspizieren,
**dadurch gekennzeichnet, dass**
die Inspektionseinrichtung (6) wenigstens zwei Bildaufnahmeeinrichtungen (62, 64, 66, 68) aufweist, welche dazu geeignet und bestimmt sind, von jedem Behältnis (10) und/oder dem an dem Behältnis (10) angeordneten Behältnisverschluss wenigstens ein ortsaufgelöstes Bild aufnehmen und eine Auswerteeinrichtung vorgesehen ist, die dazu geeignet und bestimmt ist, die aufgenommenen Bilder auszuwerten und aus den Bildern wenigstens einen Messwert zu bestimmen, wobei dieser Messwert für die an den Behältnissen (10) angeordneten Behältnisverschlüsse (20) charakteristisch ist.

14. Vorrichtung (1) nach dem vorangegangenen Anspruch,
**dadurch gekennzeichnet, dass**
die Inspektionseinrichtung (6) wenigstens drei und bevorzugt wenigstens vier Bildaufnahmeeinrichtungen (62, 64, 66, 68) aufweist.

15. Vorrichtung (1) nach wenigstens einem der vorangegangenen Ansprüche,
**dadurch gekennzeichnet, dass**
die Vorrichtung (1) eine Markierungseinrichtung zur Markierung der inspizierten Behältnisse aufweist, wobei diese Markierungseinrichtung bevorzugt dazu geeignet und bestimmt ist, an den Behältnissen eine Markierung anzubringen, welche einen Rückschluss auf den bezüglich dieses Behältnisses (10) ermittelten Messwert ermöglicht.
